Europäisches Patentamt

European Patent Office

Office européen des brevets

(11) Veröffentlichungsnummer: **0 233 639**
**A2**

## (12) EUROPÄISCHE PATENTANMELDUNG

(21) Anmeldenummer: **87102283.6**

(22) Anmeldetag: **18.02.87**

(51) Int. Cl.⁴: **G02B 6/42**

(30) Priorität: **21.02.86 DE 3605659**

(43) Veröffentlichungstag der Anmeldung:
**26.08.87 Patentblatt 87/35**

(84) Benannte Vertragsstaaten:
**AT BE DE FR GB IT NL SE**

(71) Anmelder: **Standard Elektrik Lorenz
Aktiengesellschaft
Lorenzstrasse 10
D-7000 Stuttgart 40(DE)**

(72) Erfinder: **Schmid, Peter
Heilbronner Strasse 30
D-7146 Tamm(DE)**

(74) Vertreter: **Graf, Georg Hugo, Dipl.-Ing. et al
c/o Standard Elektrik Lorenz AG Patent- und
Lizenzwesen Postfach 30 09 29 Kurze
Strasse 8
D-7000 Stuttgart 30(DE)**

(54) **Ankoppeloptik für Lichtwellenleiter.**

(57) Derartige Ankoppeloptiken bestehen aus einem an einen Lichtwellenleiter koaxial angespleißten transparenten, zylindrischen Stab, dessen freies Ende als Linse ausgebildet ist.

Gemäß der Erfindung ist der Durchmesser des Stabes (22) gleich oder kleiner als der Durchmesser des Lichtwellenleiters (15). Die Linse (23) ist asphärisch. Der Stab (22) und die Linse (23) erhalten ihre Form in einem besonderen Herstellungsprozeß durch konische Verformung des freien Stabendes unter Wärmeeinwirkung mit anschließender Ausbildung der Linse (23) unter Ausnutzung der Oberflächenspannung.

Fig 2

EP 0 233 639 A2

## Ankoppeloptik für Lichtwellenleiter

Die Erfindung betrifft eine Ankoppeloptik gemäß dem Oberbegriff der Ansprüche 1 oder 2 und ein Verfahren zur Herstellung derselben.

Eine derartige Ankoppeloptik ist durch die DE-PS 31 01 378 bekannt. Das freie Ende des an den Lichtwellenleiter angespleißten transparenten Stabes gleichen Durchmessers ist zu einer halbkugelförmigen und damit sphärischen Linse verrundet. Über diese Linse wird die divergente Strahlung einer Laserdiode auf die Kernquerschnittsfläche des Lichtwellenleiters abgebildet.

Die Licht abstrahlende Fläche einer Laserdiode ist klein gegenüber der Kernquerschnittsfläche des Lichtwellenleiters und die Abstrahlung ist stark divergent. Die Intensitätsverteilung über dem Raumwinkel folgt näherungsweise einer Gaußfunktion (Gaußscher Strahl).

Sphärische Linsen haben den Nachteil, daß Lichtstrahlen, die achsenfern auf die Linse auftreffen, einen anderen Brennpunkt besitzen als achsennahe Strahlen (sphärische Aberration). Dieses führt bei Ankoppeloptiken der vorgenannten Art zu Abbildungsfehlern bei der Abbildung der Licht emittierenden Fläche der Laserdiode auf die Stirnfläche des Kerns des angespleißten Lichtwellenleiters.

Eine andere Art einer Ankoppeloptik stellen die sogenannten Taper dar, wie sie z. B. auf den Seiten 284 bis 288 des Siemens Forschungs-und Entwicklungsberichts, Band 13 (1984), Nr. 6, Springer Verlag, Berlin, beschrieben ist. In diesem Fall bildet das verjüngte Ende des Lichtwellenleiters die Ankoppeloptik, dessen Stirnfläche zu einer sphärischen Linse verschmolzen ist. Der im gleichen Maß wie der Mantel verjüngte Kern des Lichtwellenleiters reicht bis vor zur Linse, deren wirksamer Durchmesser wesentlich größer ist als der Kerndurchmesser an dieser Stelle. In diesem Fall wirkt sich der Abbildungsfehler der sphärischen Linse nicht so gravierend aus. Dagegen verursachen die Reflexionsverluste, die am Übergang zwischen Mantel-und Kernmaterial auftreten, eine Verringerung des Einkoppelwirkungsgrades.

Zum Vermeiden von Abbildungsfehlern ist es durch die DE-OS 34 07 413 bekannt, das freie Ende einer stabförmigen Ankoppeloptik als asphärische Linse auszubilden. Der transparente, zylindrische Stab hat einen mehrfach größeren Durchmesser als der Lichtwellenleiter, während die Linse in Form einer Kugel einen größeren Durchmesser als der Stab hat. Die Linse erhält die asphärische Form durch das Aufbringen und Verschmelzen einer geringen Glasmenge mit dem kugelförmigen Linsenkörper. Es hat sich gezeigt, daß ein übergangsfreies Verschmelzen zur asphärischen Linse nicht mit ausreichender Sicherheit gewährleistet ist. Bei großem Linsendurchmesser treten bei derart hergestellten Linsen Linsenfehler auf, die zu einer Verringerung des Einkoppelwirkungsgrades führen.

Die Aufgabe der Erfindung besteht daher darin, eine Ankoppeloptik zu schaffen, die aus einem an das Ende eines Lichtwellenleiters angespleißten transparenten, zylindrischen Stab mit frontseitiger Linse besteht, die eine optimale Einkopplung der Lichtleistung von Laserdioden mit typischer Abstrahlcharakteristik gewährleistet.

Diese Aufgabe wird durch die im Anspruch 1 oder 2 angegebenen Merkmale gelöst. Die Unteransprüche zeigen vorteilhafte Weiterbildungen des Erfindungsgegenstandes und ein Verfahren zur Herstellung einer Ankoppeloptik auf.

Die durch die Erfindung erzielten Vorteile bestehen insbesondere darin, daß die asphärische Linse nach dem Herstellungsverfahren optimal ausgebildet werden kann, daß durch eine Verringerung des Stabdurchmessers die Linse in ihrer Größe optimiert und gleichzeitig der Linsenfehler reduziert werden kann, daß durch die Zusammensetzung des Stabes aus Materialien unterschiedlicher Brechzahl einerseits der Akzeptanzwinkel der Linse vergrößert und damit der Einkoppelwirkungsgrad erhöht wird und andererseits verhindert wird, daß Reflexionen auf die Laserdiode zurückwirken und daß durch das Vergüten der Linsenoberfläche der Einkoppelwirkungsgrad weiter erhöht und die Reflexion entsprechend verringert wird.

Anhand von drei Ausführungsbeispielen wird die Erfindung in Verbindung mit den Zeichnungen nachfolgend näher erläutert. Es zeigt:

Fig. 1 das Strahlungsdiagramm einer handelsüblichen Laserdiode,

Fig. 2 ein erstes Ausführungsbeispiel einer an das Ende eines Lichtwellenleiters angespleißten Ankoppeloptik gemäß der Erfindung,

Fig. 3 ein zweites Ausführungsbeispiel einer an das Ende eines Lichtwellenleiters angespleißten Ankoppeloptik gemäß der Erfindung,

Fig. 4 ein drittes Ausführungsbeispiel einer an das Ende eines Lichtwellenleiters angespleißten Ankoppeloptik gemäß der Erfindung.

Fig. 5 zwei schematische Darstellungen aus dem Verund 6 fahrensablauf zur Herstellung einer Ankoppeloptik gemäß der Erfindung.

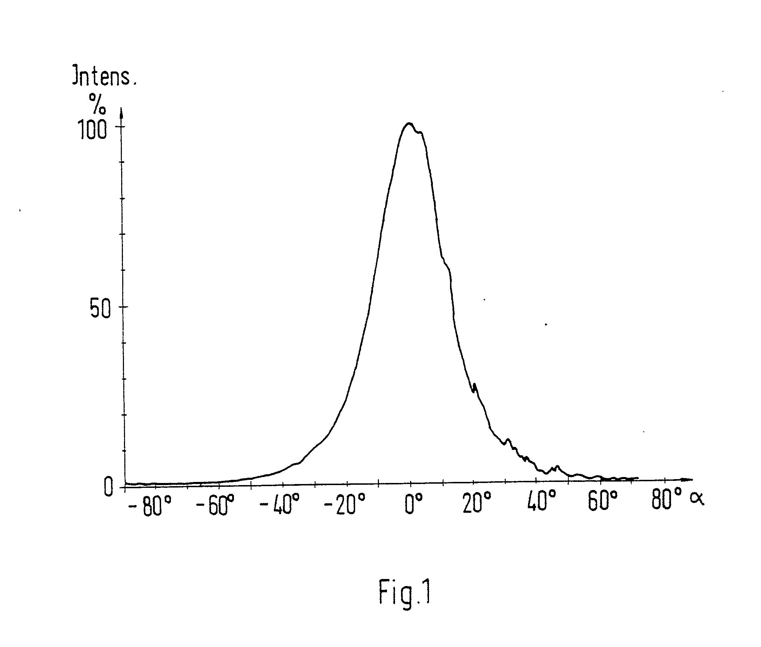

Fig. 1 zeigt den typischen Intensitätsverlauf der abgestrahlten Lichtleistung in Prozent einer Halbleiter-Laserdiode über den Abstrahlwinkel α . Bei den nachfolgend beschriebenen Ausführungsbeispielen von Ankoppeloptiken wird von der Verwendung derartiger Senderlichtquellen ausgegangen.

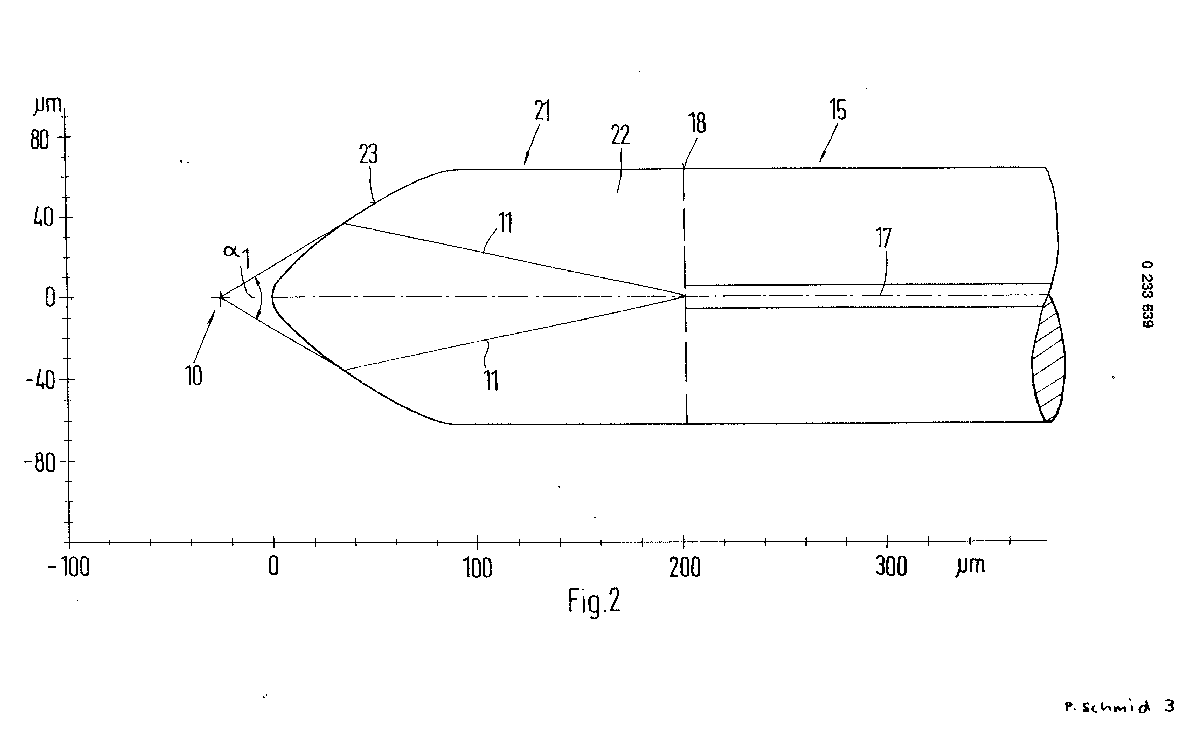

Fig. 2 zeigt eine erste Ausführungsform einer an einen Lichtwellenleiter 15 angespleißten Ankoppeloptik 21 in vergrößerter, schematischer Darstellung. Die Ankoppeloptik 21 besteht aus einem transparenten, zylindrischen Stab 22, dessen freies Ende als asphärische Linse 23 ausgebildet ist. Der Stab 22 hat den gleichen Durchmesser wie der Lichtwellenleiter 15, mit dem er konzentrisch verspleißt ist (Ebene 18). Der Stab 22 besteht aus einem Material, dessen Brechzahl gleich oder annähernd gleich der des Lichtwellenleiterkerns 17 ist. Die asphärische Krümmung der Linse 23 ist unter Berücksichtigung der Brechzahl des Stabmaterials so gewählt, daß die von einer Laserdiode 10 abgestrahlte Lichtleistung im Bereich des Abstrahlwinkels $\alpha_1$, z.B. ± 30 Grad, eingekoppelt und exakt auf der Stirnfläche des Kerns 17 in der Spleißebene 18 abgebildet wird. Randstrahlen 11 lassen den wirksamen Bereich der Linse 23 erkennen. Nur in diesem Teil muß die Linse die vorgeschriebene asphärische Krümmung haben. Dieser Teil ist gegenüber dem Durchmesser des Stabes 22 klein. Linsen dieser Größe lassen sich nach dem noch zu beschreibenden Herstellungsverfahren recht genau ausführen. Aufgrund des geringen Durchmessers des wirksamen Linsenbereichs kann die Asphäre mit kleinen Toleranzen hergestellt werden. Dadurch ergeben sich nur geringe Linsenfehler und ein höherer Einkoppelwirkungsgrad. Die Maßgabe, ein Stabmaterial mit gleicher Brechzahl wie das Kernmaterial des Lichtwellenleiters 15 vorzusehen, hat den Vorteil, daß die Einkoppelung der auf die Stirnfläche des Kerns 17 projizierten Lichtleistung reflexionsfrei erfolgt.

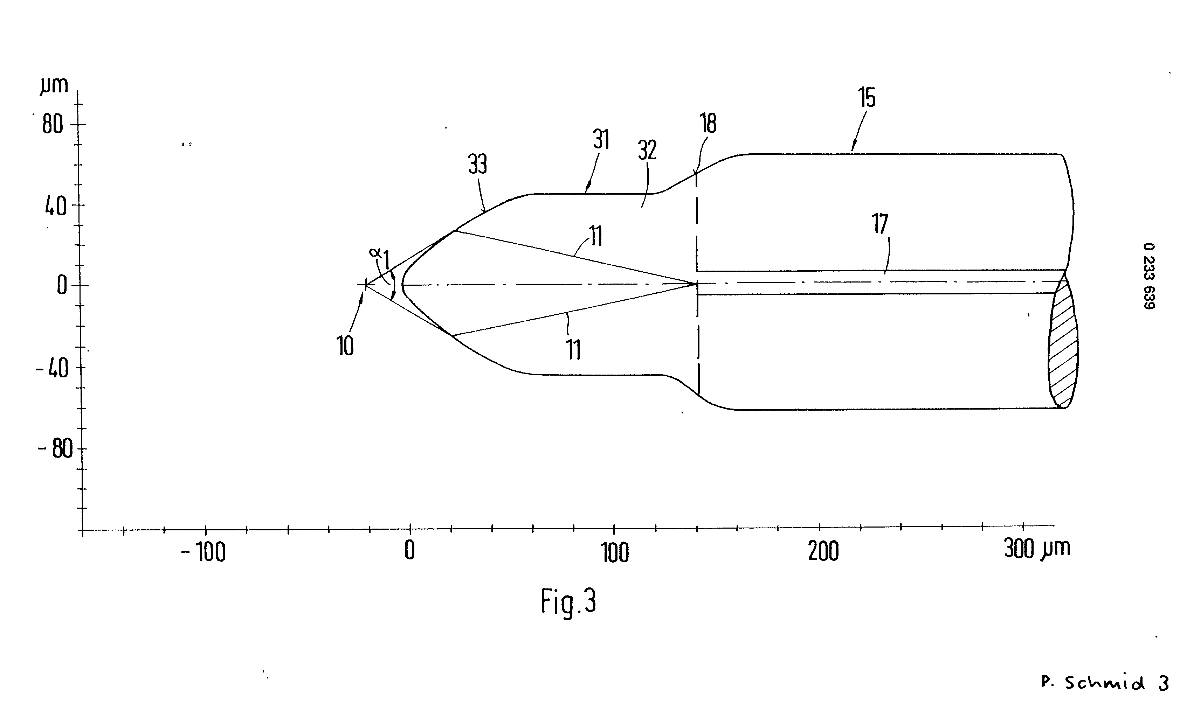

Fig. 3 zeigt eine zweite Ausführungsform einer an einen Lichtwellenleiter 15 angespleißten Ankoppeloptik 31 in vergrößerter, schematischer Darstellung. Diese Ankoppeloptik 31 unterscheidet sich gegenüber der Ausführung gemäß Fig. 1 nur darin, daß ein transparenter, zylindrischer Stab 32 vorgesehen ist, dessen Durchmesser kleiner ist als der des Lichtwellenleiters 15. Diese Maßnahme hat den Vorteil, daß die asphärische Linse 33 und damit der wirksame Linsenbereich entsprechend kleiner ist und damit genauer und fehlerfreier herzustellen ist. Entsprechend der Verringerung des Stabdurchmessers ändern sich auch alle übrigen Abmessungen der Ankoppeloptik 31, einschließlich des Abstandes zur Laserdiode 10, ohne daß sich an dem zu Fig. 1 beschriebenen Einkoppelvorgang etwas ändert.

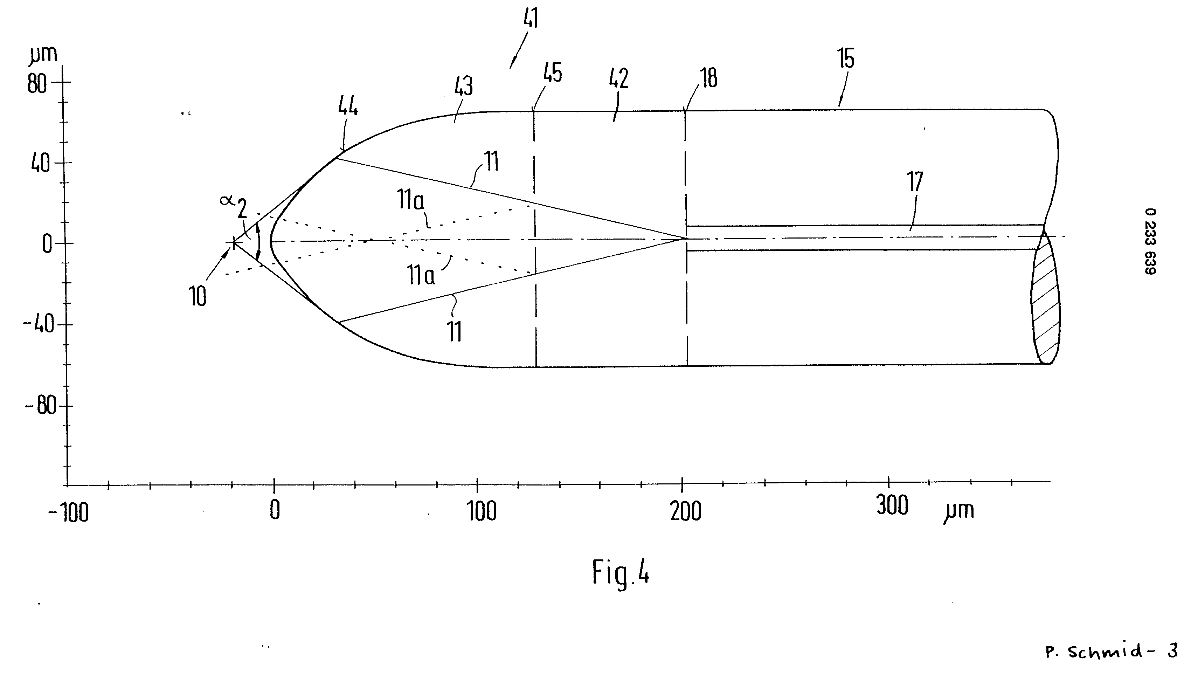

Fig. 4 zeigt eine dritte Ausführungsform einer am einen Lichtwellenleiter 15 angespleißten Ankoppeloptik 41 in vergrößerter, schematischer Darstellung. Diese Ankoppeloptik unterscheidet sich gegenüber der Ausführung gemäß Fig. 1 darin, daß der transparente, zylindrische Stab aus zwei Teilen 42 und 43 zusammengesetzt ist. Der Teil 43 besteht aus einem Material mit hoher Brechzahl, während der Teil 42 aus einem Material besteht, dessen Brechzahl der des Lichtwellenleiterkerns 17 entspricht. Die hohe Brechzahl des vorderen Stabteils 43 gestattet bei einem entsprechend flachen Kurvenverlauf der asphärischen Linse 44 die Einkopplung der von der Laserdiode 10 abgestrahlen Lichtleistung im Bereich des Abstrahlwinkels $\alpha_2$. Dieser ist größer als der Abstrahlwinkel $\alpha_1$ der Fig. 2 und 3 und entsprechend der Abstrahlcharakteristik der Laserdiode 10 auch der Einkoppelwirkungsgrad.

Bekannterweise treten an Grenzflächen optisch transparenter Materialien Reflexionen auf, wenn die Brechzahl der Materialien unterschiedlich sind. Würde im vorliegende Fall der transparente, zylindrische Stab nur aus einem Material mit hoher Brechzahl bestehen, so würde die Grenzfläche mit der Spleißebene 18 zusammenfallen. Reflexionen, die an dieser Ebene 18 auftreten, würden unmittelbar auf die Laserdiode 10 zurückwirken. Dieses kann zu Leistungsschwankungen der Lichtquelle und zu Änderungen des Wellenspektrums führen. Durch die vorbeschriebene Zweiteilung des Stabes 42/43 befindet sich die Grenzfläche 45 gemäß dem dargestellten Beispiel etwa in der Mitte des Stabes 42/43. Die an dieser Grenzfläche 45 auftretende Reflexionsstrahlung 11a bleibt ohne Einfluß auf die Laserdiode 10.

Bei allen drei vorbeschriebenen Ausführungsformen können die an der Linsenfront auftretenden Reflexionen durch eine Vergütung der Linsenoberfläche um den Faktor zehn verringert werden.

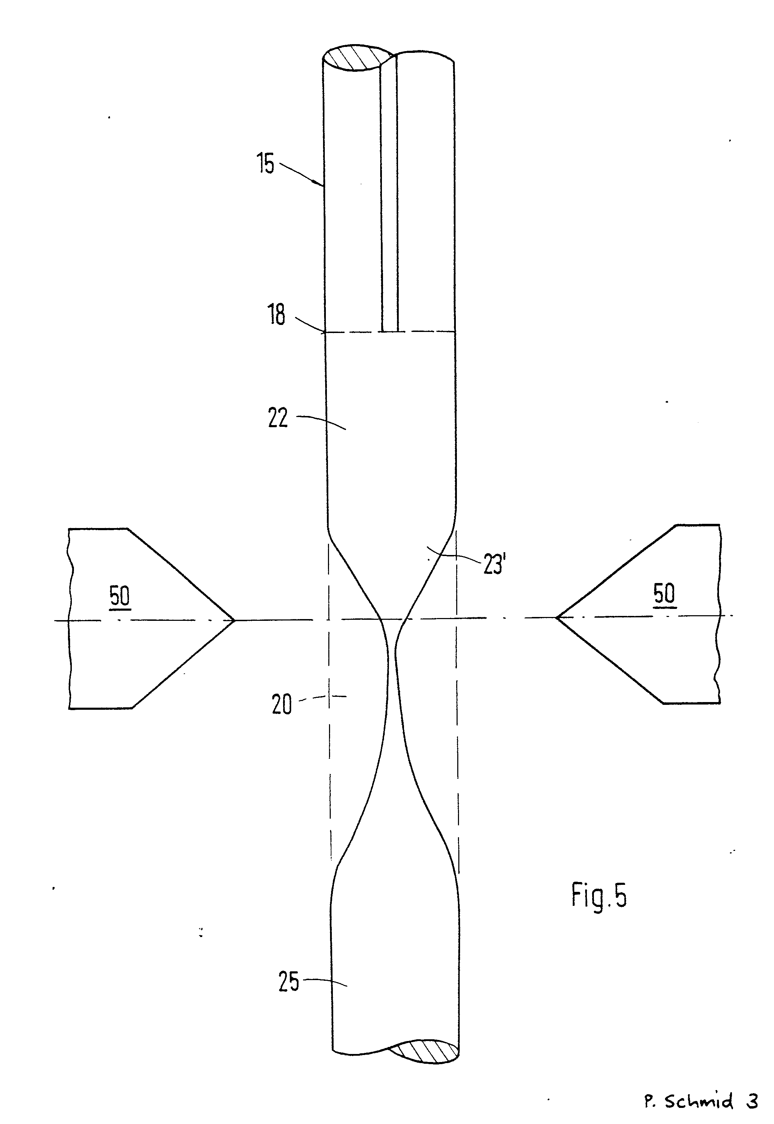

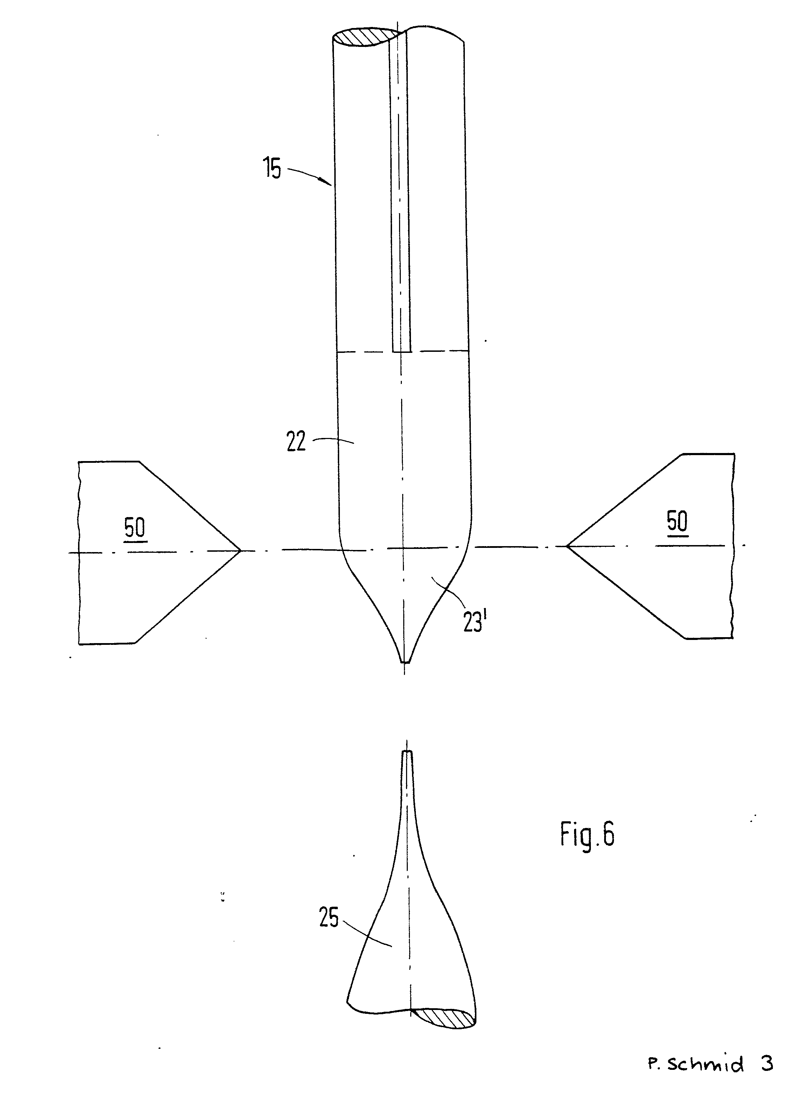

Anhand der schematischen Darstellungen der Fig. 5 und 6 wird nachfolgend das Verfahren zur Herstellung der vorbeschriebenen Ankoppeloptiken am Beispiel der Fig. 2 beschrieben.

Vorbereitend ist am Ende des Lichtwellenleiters 15 ein transparentes, zylindrisches Materialstück 20, z.B. aus Quarzglas, in bekannter Weise angespleißt (Ebene 18). Der Lichtleiter 15 ist oberhalb des Materialstücks 20 in nicht dargestellter Weise feststehend vertikal eingespannt, während das andere Ende 25 des Materialstücks 20 mit einer Ziehvorrichtung verbunden ist (ebenfalls nicht dargestellt). Quer zum Materialstück 20 sind Elektroden 50 einer Lichtbogenstrecke angeordnet. Die Elektroden sind in Längsrichtung des Materialstücks 20 verstellbar. Sie sind nach empirisch ermittelten Werten zu Beginn des Herstellungsprozesses in einer derartigen Entfernung von der Spleißstelle 18 angeordnet, daß nach Fertigstellen der Linse 23 die vorgegebene Länge der Ankoppeloptik 21 eingehalten ist. Im Bereich des aus Übersichtlichkeitsgründen nicht dargestellten Lichtbogens zwischen den beiden Elektroden 50 wird das Materialstück 20 unter der Wärmeeinwirkung weich. Gleichzeitig wird am Ende 25 des Materialstücks 20 gezogen. Letzteres schnürt sich dabei im Lichtbogenbereich doppelkegelförmig ein, wie Fig. 5 zeigt. Durch geeignete Bemessung der Lichtbogentemperatur, der zeitlichen Einwirkung und der Ziehgeschwindigkeit am Ende 25 des Materialstücks 20 erhält der Kegel 23' am Ende des Stabes 22 eine vorbestimmte Form. Anschließend wird das Materialstück 20 an der dünnsten Stelle der Einschnürung durchtrennt, das Ende 25 weggezogen oder entfernt und die beiden Elektroden 50 auf die Übergangsstelle zwischen dem Stab 22 und dem Kegel 23' verschoben, wie Fig. 6 es zeigt. Durch die geeignete Wahl der Temperatur und der richtigen Bemessung des Lichtbogens bildet sich aufgrund der Oberflächenspannung des fließfähigen Stabmaterials die asphärische Linse 23 (Fig. 2) in der vorgesehenen Form. Durch rückwärtiges Einspeisen von Licht in den Lichtwellenleiter 15 kann die Linse 23 bzw. die Ankoppeloptik 21 in an sich bekannter Weise über das aus der Linse austretende Licht während des Herstellungsprozesses geprüft werden.

Die beschriebenen Ankoppeloptiken eignen sich nicht nur für Lichtwellenleiter des beispielsweise verwendeten Einmoden-Typs, sondern auch für Mehrmodenfasern. Es ist lediglich erforderlich, die Linsenform an die jeweilige Faserart anzupassen.

## Ansprüche

1. Ankoppeloptik für Lichtwellenleiter, bestehend aus einem an den Lichtwellenleiter koaxial angespleißten transparenten, zylindrischen Stab gleichen Durchmessers, dessen freies Ende als Linse ausgebildet ist,
**dadurch gekennzeichnet**, daß die Linse (23, 43) asphärisch ist.

2. Ankoppeloptik für Lichtenwellenleiter, bestehend aus einem an den Lichtwellenleiter koaxial angespleißten transparenten, zylindrischen Stab, dessen freies Ende als Linse ausgebildet ist, dadurch gekennzeichnet, daß der Durchmesser des Stabes (32) kleiner als der Durchmesser des Lichtwellenleiters (15) ist und daß die Linse (33) asphärisch ist.

3. Ankoppeloptik nach Anspruch 1 oder 2, dadurch gekennzeichnet, daß der wirksame Durchmesser der Linse (23, 33, 43) kleiner als der Durchmesser des Stabes (22, 32, 42) ist.

4. Ankoppeloptik nach Anspruch 1 oder 2, dadurch gekennzeichnet, daß der Stab am freien Ende aus einem Material mit hoher Brechzahl (Teil 43) und am anderen Ende aus einem anderen Material (Teil 42) besteht, dessen Brechzahl annähernd oder gleich der des Kernmaterials des Lichtwellenleiters (15) ist.

5. Ankoppeloptik nach einem der Ansprüche 1 bis 4, dadurch gekennzeichnet, daß die Linse (23, 33, 43) oberflächenvergütet ist.

6. Verfahren zur Herstellung einer Ankoppeloptik nach den Ansprüchen 1 bis 4, dadurch gekennzeichnet, daß an das Ende des Lichtwellenleiters - (15) ein transparentes, zylindrisches Materialstück - (20) angespleißt wird, daß dieses Ende des Lichtwellenleiters (15) feststehend eingespannt wird, daß das Materialstück (20) an einer vorbestimmten Stelle durch eine Wärmequelle (Elektroden 50) bis zur Eweichung erwärmt wird, daß gleichzeitig am entgegengesetzten Ende des Materialstückes (20) gezogen wird, wodurch sich das Materialstück (20) an der erwärmten Stelle doppelkegelförmig verjüngt, daß bei geeigneter Konizität des feststehenden Teils des Materialstückes (Kegel 23') das andere Ende (25) des Materialstückes (20) an der dünnsten Stelle abgetrennt wird, daß gleichzeitig die Wärmequelle (Elektroden 50) relativ zum feststehenden Teil des Materialstückes (Stab 22) auf die Übergangsstelle zwischen dem zylindrischen und dem kegelförmigen Bereich verschoben wird und daß anschließend durch ein Erwärmen dieses Bereiches das Ende des feststehenden Materialstücks (Kegel 23') zu einer asphärischen Linse - (23) ausgebildet wird.

Fig.1

P. Schmid  3

0 233 639

Fig.2

P. Schmid 3

Fig.3

0 233 639

P. Schmid 3

Fig.4

0 233 639

P. Schmid - 3

Fig.5

0 233 639

15

22

50

50

23'

Fig.6

25

P. schmid 3